# EUROPÄISCHE PATENTSCHRIFT

(11) **EP 4 334 688 B1**
(45) Veröffentlichungstag und Bekanntmachung des Hinweises auf die Patenterteilung: **09.07.2025**
(21) Anmeldenummer: 22726257.3
(22) Anmeldetag: 02.05.2022
(51) Int. Cl.: G01J 3/02, G01J 3/18, G01J 3/28, G01J 3/36, G01J 5/00, G01J 5/0801, G01J 5/60

(54) **VORRICHTUNG ZUR SPEKTRAL AUFGELÖSTEN ERFASSUNG OPTISCHER STRAHLUNG**
DEVICE FOR THE SPECTRALLY RESOLVED DETECTION OF OPTICAL RADIATION
DISPOSITIF DE DÉTECTION À RÉSOLUTION SPECTRALE D'UN RAYONNEMENT OPTIQUE

(30) Priorität: 06.05.2021 DE 102021111892
(43) Veröffentlichungstag der Anmeldung: 13.03.2024
(73) Patentinhaber: 4D Photonics GmbH, 30916 Isernhagen (DE)
(72) Erfinder: FRANZ, Christoph, 30900 Negenborn (DE); BRUCHWALD, Oliver, 31515 Wunstorf (DE); FUNCK, Max, 14482 Potsdam (DE)
(74) Vertreter: Werner, André
(86) Internationale Anmeldenummer: PCT/DE2022/100328
(87) Internationale Veröffentlichungsnummer: WO 2022/233363

(56) Entgegenhaltungen:
- DE-A1- 102012 007 609
- DE-A1- 102016 225 344
- DE-A1- 19 955 759
- FU TAIRAN ET AL: "Fast fiber-optic multi-wavelength pyrometer", REVIEW OF SCIENTIFIC INSTRUMENTS, AMERICAN INSTITUTE OF PHYSICS, 2 HUNTINGTON QUADRANGLE, MELVILLE, NY 11747, vol. 82, no. 6, 6 June 2011 (2011-06-06), pages 64902 - 64902, XP012146522, ISSN: 0034-6748, DOI: 10.1063/1.3596567

## Beschreibung

Die Erfindung betrifft eine Vorrichtung zur spektral aufgelösten Erfassung optischer Strahlung während eines thermischen Prozesses. Anwendbar ist die Erfindung insbesondere für die Laserbearbeitung von Material, wie zum Beispiel Laserschneiden und Laserschweißen.

Bei der Lasermaterialbearbeitung besteht eine Korrelation zwischen der Laser-Material-Wechselwirkung, der dabei emittierten Prozessstrahlung und dem Bearbeitungsergebnis. Aus dem Stand der Technik ist bekannt, das bei der Lasermaterialbearbeitung entstehende Prozessleuchten in seiner Gesamtheit oder Teilen davon mittels Fotodioden zu erfassen, um Prozessänderungen messtechnisch ermitteln zu können. Die Auswertung und Analyse der Signalverläufe, sowie der Vergleich mit zuvor aufgenommenen Referenzsignalen ermöglicht die Realisierung einer zuverlässigen und schnellen Inline-Prozessüberwachung.

Fotodioden sind, physikalisch bedingt, nur in einem begrenzten Spektralbereich empfindlich. Aufgrund dieser Einschränkung werden für die Erfassung des Prozessleuchtens unterschiedliche Fotodioden (auch in Kombination) eingesetzt, nämlich im sichtbaren Spektrum (VIS) Silizium-Fotodioden (Si) und im nahinfraroten Spektrum (NIR) Indiumgalliumarsenid-Fotodioden (InGaAs) oder Germanium-Fotodioden (Ge).

In der Fotodiode erzeugen die auftreffenden Photonen einen zu ihrer Anzahl proportionalen elektrischen Strom. Da der von der Fotodiode generierte elektrische Fotostrom (aufgrund der typischerweise sehr geringen Lichtintensitäten) in der Regel sehr gering ist, muss dieser in geeigneter Weise rauscharm verstärkt werden.

Im unbefilterten Zustand werden die gesamten Prozessemissionen in dem von der Fotodiode abgedeckten Spektralbereich erfasst. Das Messsignal entspricht daher dem Integral der Lichtintensität im erfassten Spektrum.

Da die Intensität im Bereich der Laser- bzw. Bearbeitungswellenlänge in der Regel um ein Vielfaches höher ist als die Intensität des sekundären Prozessleuchtens im übrigen Spektrum, ist eine entsprechende optische Befilterung notwendig, um die Laserwellenlänge mit hoher optischer Dichte zu blocken. Andernfalls würde die Laserstrahlung zu stark gewichtet werden bzw. das Prozessleuchten überstrahlen und dessen Auswertung unmöglich machen. Störeinflüsse durch externe Beleuchtung (zum Beispiel Pilotlaser) müssen gleichfalls durch zusätzliche Filter aus dem von der Fotodiode erfassten Spektralbereich herausgefiltert werden.

Eine alternative Möglichkeit ist die optische Trennung von Wellenlängenbereichen durch teildurchlässige Spiegel oder Prismen, wodurch die Auswertung eines ausgewählten oder mehrerer weiterer Wellenlängenbereiche möglich wird; somit kann ein zeitgleiches Auswerten von hochintensiver Primärstrahlung und schwach leuchtender Sekundärstrahlung durchgeführt werden.

Auch ist bekannt, Spektrometer zu verwenden, um das eingangsseitig verfügbare Licht spektral aufgelöst zu analysieren. Hierfür gibt es Spektrometer unterschiedlicher Bauformen und unterschiedlicher Empfindlichkeiten. Bekannt sind zum Beispiel kompakte Spektrometer mit gekrümmten dispersiven Elementen (Gittern), die gleichzeitig auch fokussierend / kollimierend wirken. Das Gitter wird dabei vom divergenten Licht des Spaltes (oder einer Faser) getroffen und hat selbst eine fokussierende Wirkung, da es auf dem sog. Rowlandkreis gekrümmt angebracht ist. Gekrümmte Gitter sind für kleine Stückzahlen jedoch kaum wirtschaftlich einsetzbar.

Kostengünstigere plane Gitter erfordern hingegen zusätzliche optische Komponenten zur Kollimation und Fokussierung. Hierzu werden in der Regel zwei Konkavspiegel verwendet; der Einsatz von Linsen ist ebenfalls möglich, wird aber vermieden, da diese unerwünschte Abbildungsfehler mit sich bringen.

DE 10 2016 225 344 A1 beschreibt einen Polychromator, mit einem Substrat und einem optisch spektralzerlegend wirkenden Funktionselement. Das optisch spektralzerlegend wirkende Funktionselement ist ausgebildet, um eine von einer Eintrittsöffnung stammende elektromagnetische Strahlung, zum Beispiel von einer optionalen Strahlenquelle an einer Probe reflektiertes Licht spektral zu zerlegen, sodass ein spektral zerlegtes Spektrum erhalten wird.

EP 3 306 263 A1 offenbart einen chromatisch-konfokalen Abstandssensor mit einem Gehäuse, in dem eine polychromatische Lichtquelle, eine Abbildungsoptik mit einer chromatischen Längsaberration, ein Spektrometer und eine plane Strahlteilerfläche angeordnet sind.

Ein Spektrophotometer mit einem reflektierenden Dispersionselement und einer in der Auswertebene angeordneten Vielfach-Photodetektorenanordnung beschreibt ferner DE 27 58 141 A1.

Nachteilig an den bekannten Spektrometern ist die geringe Lichtausbeute bei hoher spektraler Auflösung. Um eine möglichst hohe spektrale Auflösung zu erzielen, ist wegen der Beugungsbegrenzung optischer Systeme typischerweise der Einsatz einer oder mehrerer Blenden notwendig. Die vom Messobjekt ausgesendete Lichtmenge wird durch diese Blenden so eingeschränkt, dass ein möglichst dünnes Strahlenbündel auf die sensitive Fläche der Sensoren trifft. So wird gewährleistet, dass auch kleinere Wellenlängenunterschiede nach dem Durchtreten eines Prismas oder Beugungsgitters durch den nun unterscheidbaren Auftreffort aufgelöst werden können. Die durch die Blende abgeschattete Lichtmenge steht dann nicht mehr zur Auswertung zur Verfügung.

Nachteilig kommt hinzu, dass die in der Lasertechnik typischerweise eingesetzten Bearbeitungsoptiken bereits nur wenig Prozessleuchten transmittieren, da diese auf die Laserwellenlängen optimiert sind. Da bei marktüblichen Spektrometern (zum Beispiel mit Zeilenkameras oder Fotodiodenarrays) in der Regel mit zeitlicher Integration gearbeitet wird, werden bei besonders lichtschwacher Strahlung sehr lange Integrationszeiten benötigt, wodurch auch nur sehr geringe Messraten realisierbar sind.

Wünschenswert für die Prozessüberwachung ist somit ein Spektrometer, welches zur Realisierung einer hohen zeitlichen Auflösung (durch Reduktion der Integrationszeit) besonders lichtempfindlich ist und zudem einen hohen Dynamikumfang bietet. Die hohe Dynamik wird benötigt, weil sowohl sehr lichtschwache und sehr helle Prozesse sowohl innerhalb einer Naht als auch von Naht zu Naht auf einem Bauteil erfasst werden müssen.

Der Erfindung liegt die Aufgabe zugrunde, eine Vorrichtung zur spektral aufgelösten Erfassung optischer Strahlung während eines thermischen Prozesses, insbesondere der Laserbearbeitung, bereitzustellen, die aufgrund ihres kompakten Aufbaus unter anderem in einen Laserbearbeitungskopf integrierbar ist, wobei eine spektrale Auflösung bei gleichzeitig hoher Lichtausbeute ermöglicht sein soll, sodass eine hohe Messrate zur Verfügung steht. Zusätzlich soll eine schnelle Umschaltung zwischen einzelnen Messbereichen und ein großer Dynamikumfang möglich sein.

Die Aufgabe wird durch eine Vorrichtung zur spektral aufgelösten Erfassung optischer Strahlung mit den kennzeichnenden Merkmalen nach Patentanspruch 1 gelöst. Zweckmäßige Ausgestaltungen der Erfindung finden sich in den Unteransprüchen.

Gemäß der Offenbarung umfasst die Vorrichtung zur spektral aufgelösten Erfassung optischer Strahlung während eines thermischen Prozesses, insbesondere der Laserbearbeitung, wenigstens ein in einem vorgegebenen Wellenlängenbereich lichtsensitives Element zur spektralen Auflösung, ein reflektierendes Beugungsgitter sowie wenigstens eine Linse zur Fokussierung und/oder Kollimation. Bevorzugt weist die Vorrichtung eine Sammellinse zur Fokussierung und/oder Kollimation und wenigstens zwei, jeweils in einem vorgegebenen Wellenlängenbereich lichtsensitive Elemente zur spektralen Auflösung auf.

Vorzugsweise beinhaltet ein lichtsensitives Element mehrere fotoaktive Einzelelemente, d. h. ein lichtsensitives Element ist aus einer Gruppe von fotoaktiven Einzelelementen gebildet. Zum Beispiel können die lichtsensitiven Elemente zur spektralen Auflösung aus mindestens zwei Einzelelementen, zum Beispiel in Form gruppierter Fotodioden, aufgebaut oder auch als integrierte Bauelemente, zum Beispiel Fotodiodenarrays, ausgeführt sein.

Die wenigstens eine Linse zur Fokussierung und/oder Kollimation ist vor dem Beugungsgitter angeordnet, wobei die durch die wenigstens eine Linse auf das

Beugungsgitter gelenkte optische Strahlung vom Beugungsgitter spektral zerlegt und zurück durch die wenigstens eine Linse auf das bzw. jeweils eines der lichtsensitiven Elemente fokussiert wird. Dieses Beugungsgitter kann bereichsweise unterschiedliche Beugungseigenschaften aufweisen. Beispielsweise ist ein erster Bereich speziell für die spektrale Zerlegung von Licht mit Wellenlängen im sichtbaren Bereich und ein zweiter Bereich des Beugungsgitters zur spektralen Zerlegung von Licht mit Wellenlängen im nahen Infrarot ausgelegt.

In der erfindungsgemäßen Vorrichtung wird auf die Komplexität eines gekrümmten Gitters verzichtet und die kollimierende und fokussierende Wirkung durch den doppelten Strahlendurchgang durch die wenigstens eine Linse als ein optisches Element erreicht. Dies kann ein Objektiv sein, das im einfachsten Fall aus nur einer Linse besteht. Somit wird von der perfekten Kollimation auf dem Gitter abgewichen. Die dabei auftretenden Farb- und Abbildungsfehler verhindern in der Regel den Einsatz einer entsprechenden Anordnung bei hochauflösenden Spektrometern, können jedoch bei geringer spektraler Auflösung, wie in der erfindungsgemäßen Vorrichtung, in Kauf genommen werden.

Erfindungsgemäß weist die Vorrichtung zur spektral aufgelösten Erfassung optischer Strahlung einen Umlenkspiegel, im Folgenden Spiegel genannt, auf, der entlang der Ausbreitungsrichtung der optischen Strahlung vor der wenigstens einen Linse und dem Beugungsgitter angeordnet ist, d. h., die Strahlung wird vom Spiegel durch die wenigstens einen Linse auf das Beugungsgitter gelenkt.

Aufgrund dieser Anordnung der einzelnen optischen Elemente zueinander, insbesondere der zweifachen Nutzung der wenigstens einen Linse im Strahlengang (nämlich zur Kollimation und/oder Vorfokussierung der Strahlen auf das Beugungsgitter und zur Fokussierung der vom Beugungsgitter spektral zerlegten Strahlen auf die lichtsensitiven Elemente), sowie der Integration reflektierender Eigenschaften in das Beugungsgitter kann die Vorrichtung auf einem vergleichsweise kompaktem Bauraum realisiert werden. Insbesondere lässt sich durch diese Anordnung des Strahlenganges unter Verwendung eines weiteren Spiegels das lichtsensitive Element mit seiner lichtempfindlichen Oberfläche parallel zu dem in die Vorrichtung eintretenden Prozesslichtstrahl ausgerichtet anordnen, wodurch der Bauraum minimiert wird. Somit ist eine Integration der Vorrichtung zum Beispiel in einen herkömmlichen Laserbearbeitungskopf ohne wesentliche, raumnehmende Anbauten ermöglicht.

Der Vorteil der erfindungsgemäßen Vorrichtung ist demnach die Möglichkeit, multispektrale Sensorik in einem vergleichsweise kleinen Bauraum einzusetzen. Aufgrund der spektralen Auswertung werden, beispielsweise bei Schweißprozessen, eine gegenüber dem Stand der Technik verbesserte Fehlererkennung sowie eine Klassifizierung der Fehler ermöglicht. Durch den Wegfall von Blenden geringer Größe kann die Vorrichtung auch bei Prozessen mit wenig verfügbarem Licht angewendet werden.

Die Vorrichtung ist weiterhin derart ausgebildet, dass der Spiegel als ein reflektierender Strahlteiler ausgelegt ist, der die einfallende optische Strahlung in mehrere Teilstrahlen zerlegt. Hierbei entspricht die Anzahl der Teilstrahlen typischerweise der Anzahl der lichtsensitiven Elemente. Vorzugsweise werden zwei Teilstrahlen erzeugt, die auf je ein lichtsensitives Element gelenkt werden.

Insbesondere kann der Strahlteiler derart ausgeführt sein, dass er Teilstrahlen in dedizierten, zu den anderen Teilstrahlen unterschiedlichen Wellenlängenbereichen (zum Beispiel VIS und NIR) generiert. Hierfür kann der Strahlteiler aus einer Anordnung von unterschiedlich ausgerichteten teilreflektierenden Spiegeln aufgebaut sein.

Durch eine räumlich gegeneinander verkippte Anordnung der teilreflektierenden Spiegel können die so generierten Teilstrahlen - auch unterschiedlicher Spektralbereiche - auf benachbarte Bereiche des oder der Beugungsgitter gelenkt werden, gleichzeitig jedoch dieselbe Linse zur Fokussierung und/oder Kollimation nutzen.

Dadurch ist eine optische Aufteilung in zwei oder mehrere Spektralbereiche in der Art möglich, dass diese mit unterschiedlichen lichtsensitiven Elementen erfasst werden.

Erfindungsgemäß ist jedes der lichtsensitiven Elemente in einem vorgegebenen, zu dem bzw. den anderen lichtsensitiven Elementen unterschiedlichen Wellenlängenbereich sensitiv. So ist ein erstes lichtsensitives Element im sichtbaren Wellenlängenbereich und ein zweites lichtsensitives Element im nahen Infrarotbereich empfindlich. Entsprechend ist die Vorrichtung derart aufgebaut, dass der vom Strahlteiler erzeugte Teilstrahl im sichtbaren Wellenlängenbereich auf das erste und der Teilstrahl im nahen Infrarotbereich auf das zweite lichtsensitive Element gelenkt wird.

Somit ergibt sich folgende Funktionsweise der Vorrichtung:
Zur Trennung von primärer Laserstrahlung und sekundärem Prozesslicht kann ein teildurchlässiger Spiegel verwendet werden, welcher dem eigentlichen Messaufbau vorgelagert ist.

Das zu analysierende Prozesslicht wird, zum Beispiel mittels eines Achromaten und einer Negativlinse, auf den reflektierenden Strahlteiler gelenkt. Dieser teilt den einfallenden Prozesslichtstrahl in die gewünschte Anzahl von Teilstrahlen, vorzugsweise in zwei Teilstrahlen, und lenkt diese Teilstrahlen durch die wenigstens eine Linse auf benachbarte Bereiche des oder der Beugungsgitter.

Mittels des Beugungsgitters werden die Teilstrahlen spektral aufgespalten und zurück durch die wenigstens eine Linse auf jeweils ein lichtsensitives Element fokussiert. Da sich die spektral aufgespaltenen Teilstrahlen fächerförmig vom Beugungsgitter zum lichtsensitiven Element ausbreiten, weisen die lichtsensitiven Elemente bevorzugt eine im Wesentlichen linienförmige Geometrie auf.

Weiter kann vorgesehen sein, dass die Vorrichtung eine mit den lichtsensitiven Elementen verbundene Auswerteeinrichtung umfasst, die die von den lichtsensitiven Elementen erfassten Lichtmengen ggf. elektronisch verstärkt und - spektral getrennt - auswertet.

Indem das Auslesen der von den lichtsensitiven Elementen erfassten Lichtmengen elektronisch erfolgen und ggf. entsprechend stufenweise verstärkt werden kann, ergibt sich ein hoher Dynamikumfang der Vorrichtung. Insbesondere ist durch Zu- oder Abschalten von Verstärkungsstufen ein schnelles Umschalten bei schwachen und intensiven Lichtemissionen möglich.

Weiterhin kann vorgesehen sein, dass die lichtsensitiven Elemente eine Mehrzahl von fotoaktiven Einzelelementen umfassen, die vorzugsweise entlang zum Beispiel einer Linie nebeneinander angeordnet sind, wobei jedes dieser fotoaktiven Einzelelemente mit einem separaten Kanaleingang der Auswerteeinrichtung verbunden ist. Vorzugsweise sind alle fotoaktiven Einzelelemente eines lichtsensitiven Elements im selben Wellenlängenbereich sensitiv. Insbesondere kann die Auswerteeinrichtung eingerichtet sein, eine vorgegebene Anzahl benachbarter Kanäle zu Kanal-Gruppen zusammenzufassen, sodass das von den mit diesen Kanälen verbundenen fotoaktiven Einzelelementen jeweils erfasste Licht zu einem einzigen Lichtsignal kombinierbar ist.

Somit kann durch eine Reduktion der Auflösung die fotoaktive Fläche vergrößert werden, sodass durch die nun relativ große fotoaktive Fläche auch bei wenig Licht ein verbessertes Signal-Rausch-Verhältnis erreicht werden kann. Außerdem entfallen bei der nun geringeren Auflösung die Notwendigkeit besonders guter Fokussierung und der Einsatz von Blenden mit geringer Größe, wodurch insgesamt mehr Licht für die Auswertung erfasst wird.

Indem jedes der fotoaktiven Einzelelemente einem dedizierten Eingangskanal der Auswerteeinrichtung zugeordnet ist, kann alternativ oder zusätzlich die Auswerteeinrichtung eingerichtet sein, nur das Signal von ausgewählten Kanälen zur Auswertung heranzuziehen, während die restlichen Kanäle abgeschaltet bleiben. Auf diese Art kann, da - aufgrund der spektralen Aufspaltung der Teilstrahlen durch das Beugungsgitter und deren fächerartigen Ausbreitung - auf jede der fotoaktiven Einzelelemente nur Licht eines vorgegeben Wellenlängenbereichs einfällt, das zu analysierende Prozesslicht in einem ausgewählten Frequenzband, d. h. einem ganz eng begrenzten Wellenlängenbereich, analysiert werden. Hierdurch ergibt sich die Möglichkeit, spektral starr begrenzende optische Filter im Messaufbau einzusparen.

Durch das gezielte Auslesen und Verrechnen mehrerer bzw. ausgewählter Spektralbereiche kann die Vorrichtung als Quotientenpyrometer so verwendet werden, dass immer die für die zu messende Temperatur idealen Messbereiche verwendet werden.

Auch eine Realisierung gleichzeitig messender multipler Quotientenpyrometer ist möglich. Somit können auch Messungen erfolgen, die Stützstellen des Planck'schen Strahlungsgesetzes liefern, um eine höhere Genauigkeit der Messung zu ermöglichen.

Eine Ausgestaltung der Vorrichtung sieht vor, dass die lichtsensitiven Elemente 16-kanalige Fotodiodenarrays sind. Hierbei kann ein erstes lichtsensitives Element Silizium-Fotodioden (Si) zur Lichterfassung im sichtbaren Spektrum (VIS) und ein zweites lichtsensitives Element Indiumgalliumarsenid-Fotodioden (InGaAs) zur Lichterfassung im nahinfraroten Spektrum (NIR) beinhalten.

Bei der Nutzung von Beugungsgittern entstehen neben der 1. Beugungsordnung, die die Information der spektralen Aufteilung beinhaltet, sowohl höhere Beugungsordnungen als auch die 0. Beugungsordnung. Diese Beugungsordnung 0 beinhaltet keine direkt auswertbare Information über die spektrale Zusammensetzung des Lichtes. Bei einem vorzugsweise eingesetzten Blaze-Gitter liegt der Hauptanteil der Energie in der 1. Ordnung, jedoch kann auch die Intensität der 0. Ordnung vergleichsweise hoch sein, da hierin der komplette Spektralbereich überlagert ist. Optional umfasst die Vorrichtung zusätzliche lichtsensitive Elemente (zum Beispiel Fotodioden), die jeweils im Strahlengang der Teilstrahlen zur Erfassung der Beugungsordnung 0 angeordnet sind. Somit kann durch zusätzliche Bestimmung der Lichtintensität der 0. Ordnung die Gesamtintensität mit hoher Abtastrate im zeitlichen Verlauf erfasst werden.

Weiter kann eine in Ausbreitungsrichtung der optischen Strahlung vor dem reflektierenden Strahlteiler angeordnete Hochenergie-Filtereinheit vorgesehen werden, die hochenergetische optische Strahlung stark dämpft, absorbiert oder auskoppelt. Insbesondere kann eine sog. Bandsperre, auch Bandstoppfilter genannt, eingesetzt sein, die einfallendes Licht eines vorgegebenen engen Frequenzbandes (wie beispielsweise die Strahlung im Bereich der Laserwellenlänge) stark abschwächt oder vollständig blockiert. Alternativ kann bei der Variante der Auskopplung der hochenergetischen Strahlung diese auch durch ein weiteres lichtsensitives Element erfasst und ausgewertet werden.

Zudem kann vorgesehen sein, dass die Auswerteeinrichtung eine hochauflösende Analog-Digitalwandlungseinheit umfasst. Hierbei kann die Analog-Digitalwandlungseinheit mehrkanalig ausgeführt sein und/oder eine hohe Auflösung von bis zu 20 Bit aufweisen.

Gemäß einer Ausführungsform weisen die lichtsensitiven Elemente eine Anzahl von fotoaktiven Einzelelementen auf, die jeweils für einen vorgegebenen Wellenlängenbereich sensitiv sind, wobei mittels der Auswerteeinrichtung die für eine Strahlungsintensitätsmessung heranzuziehenden Kanäle gezielt auswählbar sind.

Die Erfindung wird nachfolgend anhand eines Ausführungsbeispiels näher erläutert, wobei gleiche oder ähnliche Merkmale mit gleichen Bezugszeichen versehen sind.

Dazu zeigen in schematischer Darstellung die
- Fig. 1:: eine Vorrichtung in Seitenansicht;
- Fig. 2:: eine Draufsicht auf die Vorrichtung;
- Fig. 3:: eine Ausführung des reflektierenden Strahlteilers in Seitenansicht; und
- Fig. 4:: die Ausführung des reflektierenden Strahlteilers in Draufsicht.

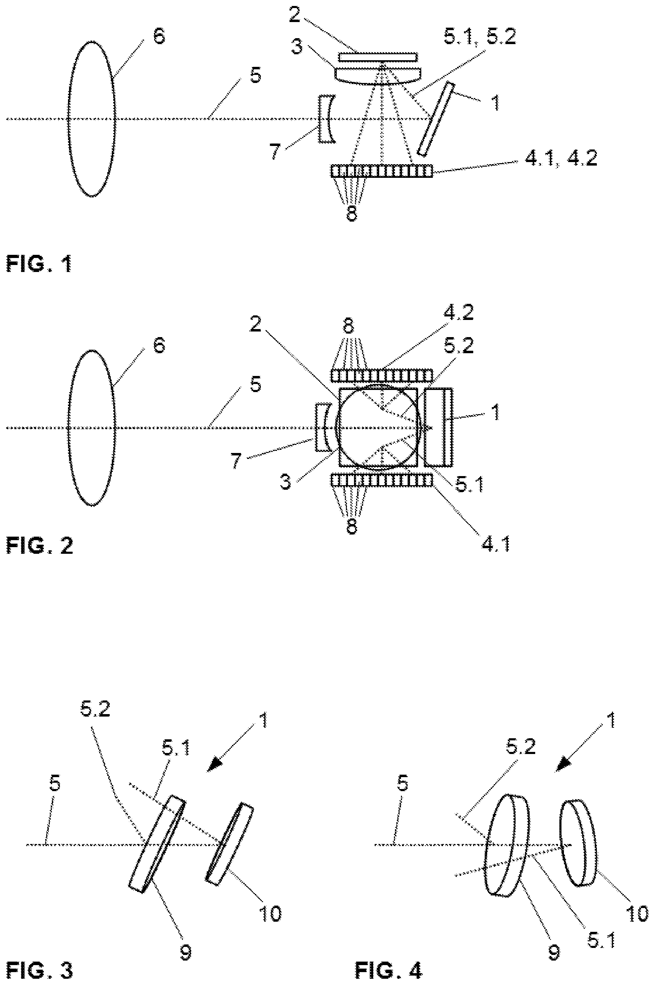

Die Vorrichtung gemäß der Figs. 1 und 2 umfasst den Achromaten 6 und die Negativlinse 7, durch welche der Strahldurchmesser reduziert und die zu analysierende optische Strahlung 5 auf den reflektierenden Strahlteiler 1 gelenkt wird. Der reflektierende Strahlteiler 1 teilt die optische Strahlung 5 in die beiden Teilstrahlen 5.1 und 5.2 und lenkt diese durch die fokussierende Linse 3 auf das Beugungsgitter 2.

Das Beugungsgitter 2 zerlegt jeden der beiden Teilstrahlen 5.1 und 5.2 in seine spektralen Bestandteile, sodass diese aufgefächert werden und durch die fokussierende Linse 3 auf die jeweils zugeordneten lichtsensitiven Elemente 4.1 bzw. 4.2 fallen.

In diesem Ausgestaltungsbeispiel sind die lichtsensitiven Elemente 4.1 bzw. 4.2 linienförmig ausgebildet, wobei sie eine Mehrzahl benachbart angeordneter fotosensitiver Einzelelemente 8 umfassen, deren Signalausgänge jeweils separat mit einem dedizierten Eingangskanal einer Auswerteeinrichtung (nicht dargestellt) verbunden sind.

Die Figuren 3 und 4 zeigen eine Ausführung des reflektierenden Strahlteilers 1, der die beiden unterschiedlich ausgerichteten teilreflektierenden Spiegel 9 und 10 aufweist. Die Ansichten entsprechen hierbei den Ansichten der Figuren 1 bzw. 2. Ein Teil der einfallenden optischen Strahlung 5, nämlich der sichtbare Wellenlängenbereich (VIS) wird vom Spiegel 9 reflektiert, während die Strahlung im Nahinfrarotbereich (NIR) durch den Spiegel 9 transmittiert. Dieser Teil der optischen Strahlung wird vom Spiegel 10 zurück durch den Spiegel 9 (auf das Beugungsgitter 2 - nicht dargestellt) reflektiert. Da beide Spiegel 9 und 10 zueinander verkippt sind, werden die Teilstrahlen 5.1 und 5.2 in jeweils unterschiedliche Richtungen reflektiert, sodass sie auf dem Beugungsgitter 2 (nicht dargestellt) an unterschiedlichen Positionen auftreffen; sie werden gewissermaßen in der 3. Dimension separiert.

### Bezugszeichenliste

- 1: reflektierender Strahlteiler
- 2: Beugungsgitter
- 3: Linse
- 4.1: lichtsensitives Element
- 4.2: lichtsensitives Element
- 5: optische Strahlung
- 5.1: Teilstrahl
- 5.2: Teilstrahl
- 6: Achromat
- 7: Negativlinse
- 8: fotosensitives Einzelelement
- 9: teilreflektierender Spiegel
- 10: teilreflektierender Spiegel

## Patentansprüche

1. Vorrichtung zur spektral aufgelösten Erfassung optischer Strahlung (5) während eines thermischen Prozesses, umfassend eine Auswerteeinrichtung, wenigstens ein, mit der Auswerteeinrichtung verbundenes, in einem vorgegebenen Wellenlängenbereich lichtsensitives Element (4.1, 4.2), ein reflektives Beugungsgitter (2) sowie wenigstens eine Linse (3) zur Kollimation und/oder Fokussierung, wobei die wenigstens eine Linse (3) vor dem Beugungsgitter (2) angeordnet ist, und wobei die optische Strahlung (5) durch die wenigstens eine Linse (3) auf das Beugungsgitter (2) gelenkt, vom Beugungsgitter (2) spektral zerlegt und zurück durch die wenigstens eine Linse (3) auf das wenigstens eine lichtsensitive Element (4.1, 4.2) gelenkt wird, wobei die Vorrichtung zwei lichtsensitive Elemente (4.1, 4.2), die für jeweils einen vorgegebenen, zu dem anderen lichtsensitiven Element (4.1, 4.2) unterschiedlichen Wellenlängenbereich sensitiv sind, umfasst,
**dadurch gekennzeichnet, dass**
die Vorrichtung einen Spiegel, der entlang der Ausbreitungsrichtung der optischen Strahlung (5) vor der wenigstens einen Linse (3) und dem Beugungsgitter (2) angeordnet ist, umfasst, wobei der Spiegel ein reflektierender Strahlteiler (1) ist, der die einfallende optische Strahlung (5) in zwei Teilstrahlen (5.1, 5.2) aufteilt, die vom Beugungsgitter (2) spektral zerlegt und zurück durch die wenigstens eine Linse (3) auf jeweils eines der lichtsensitiven Elemente (4.1, 4.2) gelenkt werden, wobei ein erstes lichtsensitives Element (4.1) der beiden lichtsensitiven Elemente (4.1, 4.2) im sichtbaren Wellenlängenbereich und ein zweites lichtsensitives Element (4.2) der beiden lichtsensitiven Elemente (4.1, 4.2) im nahen Infrarotbereich sensitiv ist, und der Strahlteiler (1) eine Anordnung von entlang des Strahlengangs der einfallenden optischen Strahlung (5) unterschiedlich ausgerichteten teilreflektierenden Spiegeln (9, 10) aufweist, wobei jeder der teilreflektierenden Spiegel (9, 10) einen Teilstrahl (5.1, 5.2) eines jeweils vorgegebenen Wellenlängenbereichs der optischen Strahlung (5) auf einen vorgegebenen Bereich des Beugungsgitters (2) lenkt und wobei zumindest der in Bezug zur einfallenden optischen Strahlung (5) vorne angeordnete teilreflektierende Spiegel (9) für Strahlung außerhalb des vorgegebenen Wellenlängenbereichs transparent ist.

2. Vorrichtung nach Anspruch 1, **dadurch gekennzeichnet, dass** die lichtsensitiven Elemente (4.1, 4.2) eine Anzahl von fotoaktiven Einzelelementen (8) umfassen, die jeweils mit einem Eingangskanal der Auswerteeinrichtung verbunden sind, wobei mittels der Auswerteeinrichtung die Eingangskanäle in Kanal-Gruppen kombinierbar sind.

3. Vorrichtung nach Anspruch 1, **dadurch gekennzeichnet, dass** die lichtsensitiven Elemente (4.1, 4.2) Fotodiodenarrays sind.

4. Vorrichtung nach Anspruch 1, **dadurch gekennzeichnet, dass** sie zwei weitere lichtsensitive Elemente umfasst, die jeweils im Strahlengang der Teilstrahlen (5.1, 5.2) zur Erfassung der 0-ten Beugungsordnung angeordnet sind.

5. Vorrichtung nach Anspruch 1, **dadurch gekennzeichnet, dass** sie eine in Ausbreitungsrichtung der optischen Strahlung (5) vor dem reflektierenden Strahlteiler (1) angeordnete Hochenergie-Filtereinheit aufweist, die hochenergetische optische Strahlung (5) auskoppelt.

6. Vorrichtung nach Anspruch 1, **dadurch gekennzeichnet, dass** die Auswerteeinrichtung eine hochauflösende Analog-Digitalwandlungseinheit umfasst.

7. Vorrichtung nach Anspruch 1, **dadurch gekennzeichnet, dass** die lichtsensitiven Elemente (4.1, 4.2) eine Anzahl von fotoaktiven Einzelelemente (8) umfassen, die jeweils mit einem Eingangskanal der Auswerteeinrichtung verbunden sind, wobei mittels der Auswerteeinrichtung die für eine Strahlungsintensitätsmessung heranzuziehenden Eingangskanäle gezielt auswählbar sind.

## Claims

1. Device for the spectrally resolved detection of optical radiation (5) during a thermal process, comprising an evaluation device, at least one, in a predefined wavelength range light-sensitive element (4.1, 4.2), a reflective diffraction grating (2) and at least one lens (3) for collimation and/or focusing, wherein the at least one lens (3) is arranged in front of the diffraction grating (2), and wherein the optical radiation (5) is directed through the at least one lens (3) onto the diffraction grating (2), is spectrally separated from the diffraction grating (2) and is directed back through the at least one lens (3) onto the at least one light-sensitive element (4.1, 4.2), wherein the device comprises two light-sensitive elements (4.1, 4. 2), each of which is sensitive to a predefined wavelength range that is different from the other light-sensitive element (4.1, 4.2),
**characterized in that,**
the device comprises a mirror arranged along the propagation direction of the optical radiation (5) in front of the at least one lens (3) and the diffraction grating (2), wherein the mirror is a reflecting beam splitter (1) which converts the incident optical radiation (5) into two partial beams (5.1, 5. 2) which are spectrally separated from the diffraction grating (2) and are directed back through the at least one lens (3) onto in each case one of the light-sensitive elements (4.1, 4.2), wherein a first light-sensitive element (4.1) of the two light-sensitive elements (4.1, 4. 2) is sensitive in the visible wavelength range and a second light-sensitive element (4.2) of the two light-sensitive elements (4.1, 4. 2) is sensitive in the near infrared range, and the beam splitter (1) has an arrangement of partially reflecting mirrors (9, 10) which are oriented differently along the beam path of the incident optical beam (5), wherein each of the partially reflecting mirrors (9, 10) directs a partial beam (5.1, 5.2) of a respective predefined wavelength range of the optical radiation (5) onto a predefined region of the diffraction grating (2), and wherein at least the partially reflecting mirror (9) arranged at the front in relation to the incident optical radiation (5) is transparent for radiation outside the predefined wavelength range.

2. Device according to claim 1, **characterized in that** the light-sensitive elements (4.1, 4.2) comprise a number of photoactive individual elements (8) which are each connected to an input channel of the evaluation device, wherein the input channels are combinable in channel groups by means of the evaluation device.

3. Device according to claim 1, **characterized in that** the light-sensitive elements (4.1, 4.2) are photodiode arrays.

4. Device according to claim 1, **characterized in that** it comprises two further light-sensitive elements, each of which is arranged in the beam path of the partial beams (5.1, 5.2) for detecting the 0th diffraction order.

5. Device according to claim 1, **characterized in that** it has a high-energy filter unit arranged in front of the reflecting beam splitter (1) in the direction of propagation of the optical radiation (5), which couples out high-energy optical radiation (5).

6. Device according to claim 1, **characterized in that** the evaluation device comprises a high-resolution analog-digital conversion unit.

7. Device according to Claim 1, **characterized in that** the light-sensitive elements (4.1, 4.2) comprise a number of photoactive individual elements (8), each of which is connected to an input channel of the evaluation device, wherein the input channels to be used for a radiation intensity measurement are specifically selectable by means of the evaluation device.

## Revendications

1. Dispositif de détection à résolution spectrale d'un rayonnement optique (5) pendant un processus thermique, comprenant un dispositif d'évaluation, au moins un élément (4.1, 4.2) photosensible, relié au dispositif d'évaluation, dans une plage de longueurs d'onde prédéfinie, un réseau de diffraction réfléchissant (2) ainsi qu'au moins une lentille (3) pour la collimation et/ou la focalisation, l'au moins une lentille (3) étant disposée devant le réseau de diffraction (2), et le rayonnement optique (5) étant dirigé par l'au moins une lentille (3) sur le réseau de diffraction (2), décomposé spectralement par le réseau de diffraction (2) et renvoyé par l'au moins une lentille (3) sur l'au moins un élément photosensible (4.1, 4.2), le dispositif comprenant deux éléments photosensibles (4.1, 4.2) qui sont sensibles chacun à une plage de longueurs d'onde prédéfinie, différente de celle de l'autre élément photosensible (4.1, 4.2),
**caractérisé en ce que**
le dispositif comprend un miroir qui est disposé le long de la direction de propagation du rayonnement optique (5) devant l'au moins une lentille (3) et le réseau de diffraction (2), le miroir étant un séparateur de faisceau réfléchissant (1) qui divise le rayonnement optique incident (5) en deux faisceaux partiels (5.1, 5.2) qui sont séparés spectralement par le réseau de diffraction (2) et renvoyés à travers l'au moins une lentille (3) sur chacun des éléments photosensibles (4.1, 4.2), un premier élément photosensible (4.1) des deux éléments photosensibles (4.1, 4.2) étant sensible dans la plage de longueurs d'onde visibles et un deuxième élément photosensible (4.2) des deux éléments photosensibles (4.1, 4.2) étant sensible dans la plage du proche infrarouge, et le diviseur de faisceau (1) présente un agencement de miroirs partiellement réfléchissants (9, 10) orientés différemment le long du trajet du faisceau du rayonnement optique incident (5), chacun des miroirs partiellement réfléchissants (9, 10) émettant un faisceau partiel (5.1, 5.2) d'une plage de longueurs d'onde respectivement prédéfinie du rayonnement optique (5) sur une zone prédéfinie du réseau de diffraction (2) et au moins le miroir partiellement réfléchissant (9) disposé à l'avant par rapport au rayonnement optique incident (5) étant transparent pour le rayonnement en dehors de la plage de longueurs d'onde prédéfinie.

2. Dispositif selon la revendication 1, **caractérisé en ce que** les éléments photosensibles (4.1, 4.2) comprennent un certain nombre d'éléments individuels photoactifs (8), qui sont reliés chacun à un canal d'entrée du dispositif d'évaluation, les canaux d'entrée étant combinables en groupes de canaux au moyen du dispositif d'évaluation.

3. Dispositif selon la revendication 1, **caractérisé en ce que** les éléments photosensibles (4.1, 4.2) sont des réseaux de photodiodes.

4. Dispositif selon la revendication 1, **caractérisé en ce qu'il** comprend deux autres éléments photosensibles qui sont disposés respectivement sur le trajet des faisceaux partiels (5.1, 5.2) pour détecter le 0e ordre de diffraction.

5. Dispositif selon la revendication 1, **caractérisé en ce qu'il** comprend une unité de filtrage à haute énergie disposée en amont du séparateur de faisceau réfléchissant (1) dans le sens de propagation du rayonnement optique (5), qui découple le rayonnement optique à haute énergie (5).

6. Dispositif selon la revendication 1, **caractérisé en ce que** le dispositif d'évaluation comprend une unité de conversion analogique-numérique à haute résolution.

7. Dispositif selon la revendication 1, **caractérisé en ce que** les éléments photosensibles (4.1, 4.2) comprennent un certain nombre d'éléments individuels photoactifs (8) qui sont reliés chacun à un canal d'entrée du dispositif d'évaluation, les canaux d'entrée à utiliser pour une mesure d'intensité de rayonnement pouvant être sélectionnés de manière ciblée au moyen du dispositif d'évaluation.
